# EUROPEAN PATENT APPLICATION

(11) **EP 4 782 346 A1**
(43) Date of publication of application: **29.07.2026**
(21) Application number: 24867841.9
(22) Date of filing: 03.06.2024
(51) Int. Cl.: B65B 7/16, B65B 7/28, B65B 51/10, B65B 51/14, B65B 57/00, B65B 59/00

(54) **PACKAGING DEVICE**

(30) Priority: 22.09.2023 JP 2023158714; 09.02.2024 JP 2024018814
(71) Applicant: Teraoka Seiko Co., Ltd., Tokyo 146-8580 (JP)
(72) Inventor: KONDO, Hideaki, Tokyo 146-8580 (JP)
(74) Representative: Bardehle Pagenberg Partnerschaft mbB Patentanwälte Rechtsanwälte
(86) International application number: PCT/JP2024/020141
(87) International publication number: WO 2025/062754

(57) **Abstract**

An object is to address various points to be improved in a packaging device that performs top sealing on containers of the same size, and that does not correspond to a plurality of sizes of containers. A packaging device that is capable of replacing a plurality of sealing and cutting dies to seal a film to containers of a plurality of sizes, the packaging device including: upper and lower sealing and cutting dies corresponding to the containers of the plurality of sizes; and determination means provided in a device body and for determining a loading state of the sealing and cutting dies.

## Description

### TECHNICAL FIELD

The present invention relates to a packaging device that covers a tray on which a product to be packaged is placed with a film and heat-welds the film to an edge portion of the tray.

### BACKGROUND ART

As a packaging device in the related art, there is a packaging device that performs top sealing on a large number of trays by placing food, which is a product to be packaged, on a measuring scale, conveying the food to a tray to be supplied onto a conveyor, and heat-sealing the food to a lid of a film on the tray (for example, see Patent Document 1).

### CITATION LIST

### Patent Document

Patent Document 1: JP2013-515654A

### SUMMARY OF INVENTION

### Technical Problem

The packaging device described in Patent Document 1 performs top sealing on containers of the same size, and is not a device corresponding to a plurality of sizes of containers, and there are various points to be improved.

### Solution to Problem

A packaging device according to the present invention includes at least the following configuration.

A packaging device that is capable of replacing a plurality of sealing and cutting dies to seal a film to containers of a plurality of sizes, the packaging device including: upper and lower sealing and cutting dies corresponding to the containers of the plurality of sizes; and determination means provided in a device body and for determining a loading state of the sealing and cutting dies.

### ADVANTAGEOUS EFFECTS OF INVENTION

According to the present invention, it is possible to provide the packaging device that can perform packaging corresponding to a plurality of sizes of the containers.

### BRIEF DESCRIPTION OF DRAWINGS

[FIG. 1] A right perspective view showing an appearance of a packaging device according to an embodiment of the present invention.
[FIG. 2] A left perspective view showing the appearance of the packaging device according to the embodiment of the present invention.
[FIG. 3] A top view showing the appearance of the packaging device according to the embodiment of the present invention.
[FIG. 4] A right side view of the packaging device according to the embodiment of the present invention.
[FIG. 5] A right side view of measuring means and packaging means (in which a part of a device frame is removed).
[FIG. 6] A perspective view of the measuring means and the packaging means (in which a part of the device frame is removed).
[FIG. 7] A front sectional view showing an upper sealing and cutting die and an upper sealing and cutting die holder, in which FIG. 7(a) shows the upper sealing and cutting die holder in a case where the upper sealing and cutting die is not loaded, FIG. 7(b) shows the upper sealing and cutting die alone, and FIG. 7(c) shows a state in which the upper sealing and cutting die is loaded in the upper sealing and cutting die holder.
[FIG. 8] A view showing the upper sealing and cutting die, in which FIG. 8(a) is a top view, FIG. 8(b) is an upper perspective view, and FIG. 8(c) is a lower perspective view.
[FIG. 9] A view showing a state in which the upper sealing and cutting die is loaded in the upper sealing and cutting die holder, in which FIG. 9(a) is a top view, FIG. 9(b) is a front view, FIG. 9(c) is a bottom view, FIG. 9(d) is an upper perspective view, FIG. 9(e) is a right side view, and FIG. 9(f) is a conceptual view showing a heat transfer member.
[FIG. 10] A view showing a state in which the upper sealing and cutting die is not loaded in the upper sealing and cutting die holder, in which FIG. 10(a) is a top view, FIG. 10(b) is a front view, FIG. 10(c) is a bottom view, FIG. 10(d) is an upper perspective view, FIG. 10(e) is a right side view, and FIG. 10(f) is an enlarged view of a portion D of FIG. 10(d).
[FIG. 11] A view showing a lower sealing and cutting die, in which FIG. 11(a) is a top view and FIG. 11(b) is a side sectional view.
[FIG. 12] A perspective view showing a state where the lower sealing and cutting die is attached to and detached from a lower sealing and cutting die holder.
[FIG. 13] A view showing an operation mechanism of determination of a loading state.
[FIG. 14] A view showing a display example of a determination result on a measurement screen.
[FIG. 15] A view showing a layout example of a display screen.
[FIG. 16] A view showing the layout example of the display screen.
[FIG. 17] A view showing the layout example of the display screen.
[FIG. 18] A partially enlarged view of the side sectional view of the lower sealing and cutting die.
[FIG. 19] A side sectional view showing a change in state in a case where the lower sealing and cutting die is pushed up against the upper sealing and cutting die.

### DESCRIPTION OF EMBODIMENTS

Hereinafter, an example of embodiments of a packaging device according to the present invention will be described in detail with reference to the accompanying drawings, where the following drawings are diagrams created for the purpose of description, and members unnecessary for the description may be intentionally omitted for clarity. In addition, the members may be intentionally shown in an enlarged or reduced scale for description, and the drawings do not show an exact scale. In the following description, the same reference numerals in different figures denote the parts having the same functions, and the duplicated description thereof will be omitted as appropriate.

### (Overall Configuration)

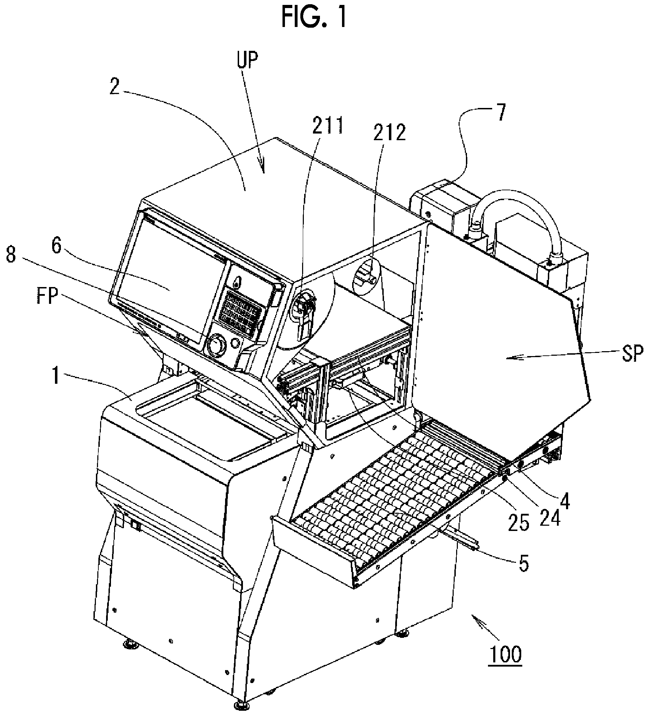

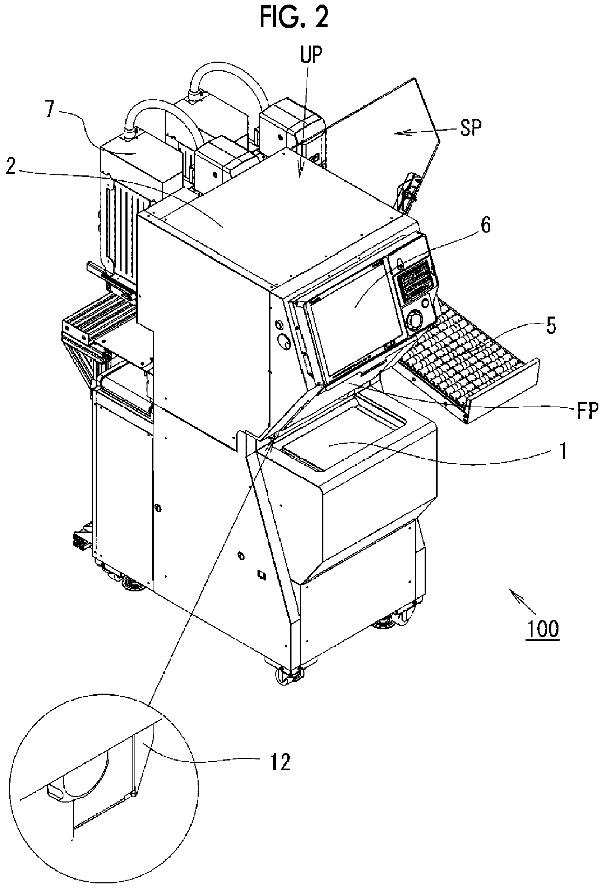

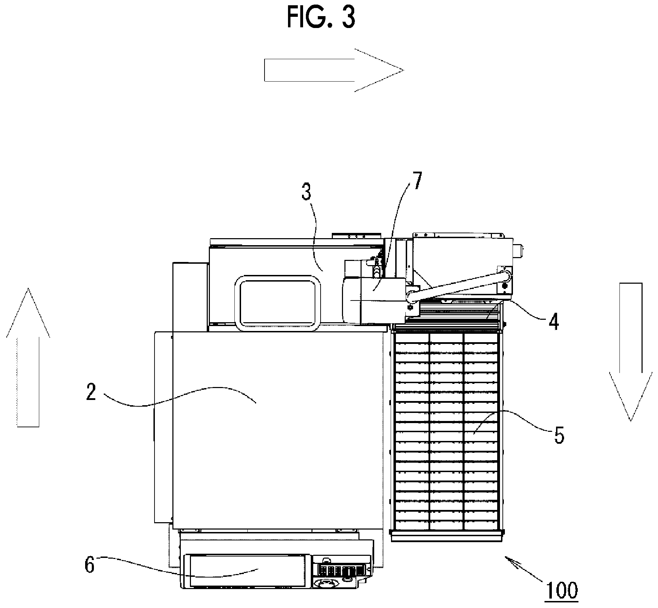

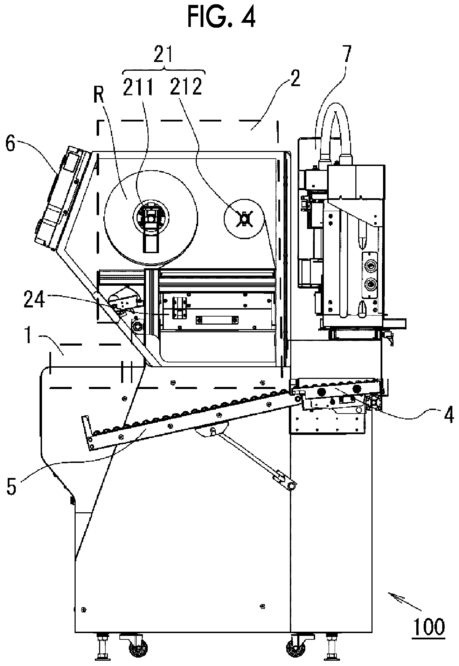

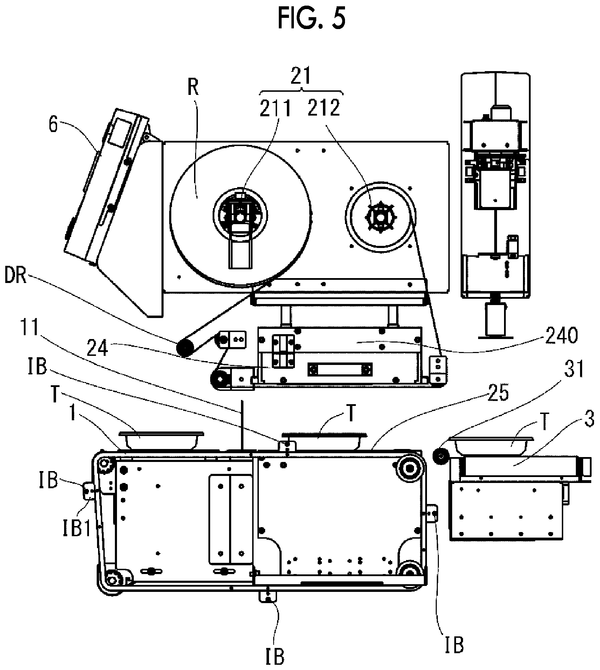

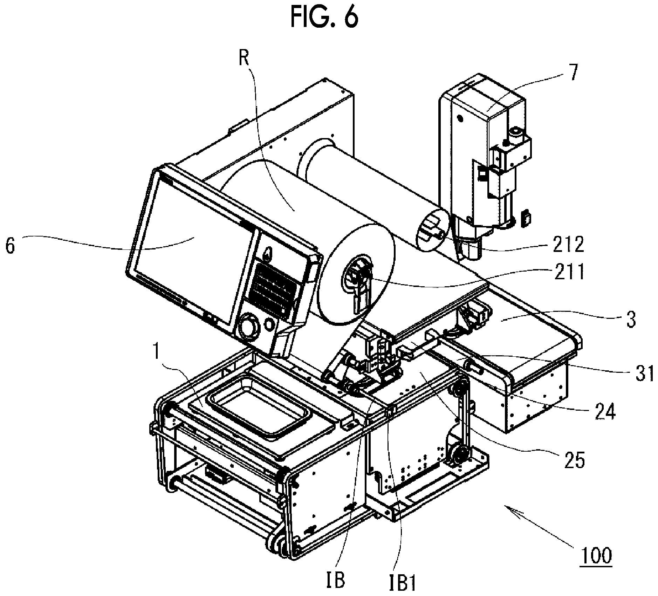

FIGS. 1 to 4 are views showing an appearance of the packaging device according to the embodiment of the present invention, in which FIG. 1 is a perspective view, FIG. 2 is a left perspective view, FIG. 3 is a top view, and FIG. 4 is a right side view. FIGS. 5 and 6 are views particularly showing measuring means and packaging means, in which FIG. 5 is a right side view (in which a part of a device frame is removed) and FIG. 6 is a perspective view (in which a part of a device frame is removed).

A packaging device 100 according to the embodiment of the present invention shown in FIGS. 1 to 3 automatically performs a series of operations until carrying-out after performing a top sealing process and label attachment after measuring a product to be packaged and carrying a tray T on which the product to be packaged is placed into a machine while performing a gas replacement process for extending a best-before date of the product to be packaged (processing the entire welding portion at once). In other words, it can be described as a device in which a packaging step is present between a measuring step of the product to be packaged and a label attachment step. More specifically, as shown by an arrow in FIG. 3, the packaging device 100 is configured as follows. The weight of the product to be packaged is measured by placing the tray T on which the product to be packaged is placed on measuring means 1 (see FIG. 1), the tray T is carried into the device frame having packaging means 2 by an infeed bar IB (see FIGS. 5 and 6), a lower sealing and cutting die 25 (see FIG. 1) pushes up the tray T upward in the device frame, first, air present in a space formed between the film held at both ends by film holding means 211 and surplus film winding means 212 (see FIG. 1) and always tensioned and the tray T is replaced with an inert gas, then the film is heat-welded and sealed by sandwiching the film between the lower sealing and cutting die 25 and an upper sealing and cutting die 24 (see FIG. 1) while bringing the edge portion of the tray T into contact with the film, the film is cut, and then the lower sealing and cutting die 25 and the tray T descend to return to a predetermined height (a reference position), the tray T is transferred into a downstream region 3 by moving the tray T in the carry-in direction again by the infeed bar IB (see FIGS. 5 and 6), the tray T is discharged to a first discharge stage 4 by moving the tray T in the carry-out direction orthogonal to the carry-in direction and attaching the label by label attachment means 7, and further the tray T is moved in a direction opposite to the carry-in direction to be sent to a second discharge stage 5. In the embodiment of the present invention, three types of upper sealing and cutting dies and lower sealing and cutting dies are prepared and configured to be replaceable in order to correspond to three types of trays T having different sizes, that is, "large", "medium", and "small". However, such an aspect is merely an example, and the types of the sizes may be two types of "large" and "small", or four or more types of sizes may be prepared, or the size of the tray may be only one type and the aspect may not be based on the replacement.

The measuring means 1, the packaging means 2, and the downstream region 3 are arranged in a vertical direction from the front side toward the rear side of the device. In addition, as shown in FIG. 1, a console 6 having an operation portion such as a display portion, a numeric key pad, and a touch panel on a front surface and having control means inside is disposed above the measuring means 1 and on an upstream side of the measuring means 1 in the conveyance direction. Regarding this disposition, more specifically, the lower end portion of the case of the console 6 is located on the upstream side of the measuring means 1, the center of the console 6 and the center of the display portion are located in the region of the measuring means 1, and the console 6 is disposed to be inclined, but the upper end portion of the case of the console 6 is also located on the upstream side of the measuring means 1. In addition, an upper portion of the downstream region 3 is the label attachment means 7 for printing and attaching a product label having information such as the measured weight, a unit price, and a price. Further, a mechanism for gas replacement is provided in the lower sealing and cutting die 25, which is not shown in FIGS. 1 to 3. In the present specification, the term "gas replacement" is used in a broad sense to refer to a process of replacing air in the product to be packaged with an inert gas for extending the best-before date (regardless of specific steps), and includes both an aspect of "gas replacement" in a narrow sense of completely removing air and then introducing gas and an aspect of "gas flush" of blowing gas to push out air.

In the embodiment of the present invention having such a configuration, since the top sealing is performed while performing the gas replacement between the product to be packaged and the film, the work efficiency can be improved by performing the gas replacement process for extending the best-before date of the product to be packaged and the packaging process by the top sealing substantially at the same time.

In addition, since the embodiment of the present invention is configured such that the tray T inserted from the front side is packaged and then returns to the front side again, the workability in the backstage is greatly improved, and this configuration is realized in a compact manner. However, from the viewpoint of performing the gas replacement process for extending the best-before date of the product to be packaged and the packaging process by the top sealing substantially at the same time, the configuration in which the tray is inserted from the front side and then returns to the front side is not an essential configuration, and the configuration can be realized in a form of simply conveying the tray in one direction from the front side to the rear side, or can be realized in a form of performing the packaging process first and then performing the measuring process. Further, a device specialized in the packaging process can be configured by excluding the measuring process or the label attachment process. This point will be described as another embodiment.

The device frame shown in FIG. 1, particularly the device frame of the upper portion, has a large meaning in that the device frame not only has a role of disposing the packaging means 2 and other components inside the device frame but also blocks the inside from the outside. In addition, a buffer tank (not shown) is disposed in the device frame of the lower portion for the gas replacement. In addition, after measurement is performed by the measuring means 1, the tray T is conveyed, and the top sealing is performed by closing the upper and lower sealing and cutting dies, but a shutter 11 is provided in a portion including a part of a region of the measuring means 1 between the measuring means 1 and the packaging means 2 in order to prevent an operator or the like from mistakenly inserting a hand and causing an unexpected accident (see FIG. 5). At a point in time when the tray T is conveyed to the packaging means 2 by the infeed bar IB (see FIGS. 5 and 6), the inside and outside of the housing are blocked by the shutter 11. Since the conveyance means of the embodiment of the present invention is the infeed bar IB (see FIGS. 5 and 6) instead of a belt conveyor or the like, the shutter 11 is configured to be closed by being raised from the bottom to the top while avoiding the chain portion (see FIG. 5). However, the shutter may be configured to be closed by descending from the top to the bottom, or the safety may be ensured by stopping the device in a case where the intrusion of the hand is detected by a sensor without providing the shutter.

In order to improve convenience in conveyance, the first discharge stage 4 and the second discharge stage 5 are configured to be attachable and detachable. In addition, after the discharge stages are removed, the label attachment means 7 is configured to be able to slide in the left direction in FIG. 3 to be within the range of the device frame in the left-right direction not to interfere with the conveyance.

The measuring means 1 is configured to measure the weight of the placed product to be packaged and the tray T, and transmits information of the measured weight to the control means of the console 6. In addition, as shown in FIG. 5, the rod-shaped infeed bars IB are bridged at four positions in the circumferential direction with respect to two chains on the left and right that can circulate the entire front and rear periphery from the front side of the measuring means 1 to the rear side of the packaging means 2, and the placed tray T can be carried into the device frame having the packaging means 2 and can be transferred to the downstream region 3 as it is. More specifically, as shown in FIG. 5, eight infeed bar support members IB1 for bridging the infeed bars IB are provided at four positions in the circumferential direction of the two chains on the left and right, and four antibacterial-treated metal rod-shaped infeed bars IB are connected (see also FIG. 6). The intervals of the infeed bars IB for the circumferential disposition are intervals at which the infeed bars IB do not interfere with the next product to be packaged placed on the measuring means 1 in a case where each of the infeed bars IB performs an operation of retreating once (this will be described later). The height of the infeed bars IB with respect to the placement surface of the tray T is configured to be located at the center of the height of the bottom surface and the height of the top surface of the tray T, but the height may be appropriately changed as long as the tray T can be stably conveyed.

As the trays T, as described above, three types of "large", "medium", and "small" are set, and the upper sealing and cutting die 24 and the lower sealing and cutting die 25 for performing the packaging process corresponding to each size are prepared and are replaceable. Specifically, in the present embodiment, an upper sealing and cutting die 24A for a large tray having a tray size of a width of 150 mm and a depth of 150 mm, an upper sealing and cutting die 24B for a medium tray having a tray size of a width of 150 mm and a depth of 120 mm, and an upper sealing and cutting die 24C for a small tray having a tray size of a width of 120 mm and a depth of 120 mm are prepared. However, the outer shape of the sealing and cutting die is the same size regardless of the tray size. In order to properly center the three types of trays T of "large", "medium", and "small" with respect to the infeed bar IB, a recess is provided on the placement table of the measuring means 1 to correspond to the "large", "medium", and "small" tray sizes and to have slightly different depths. That is, a deep recess of the medium size is disposed inside the recess of the large size, and a recess of the small size that is deeper is disposed inside the recess of the medium size. The difference in level due to the recess is made to be a slight difference not to be a resistance in a case of transferring the tray T by the infeed bar IB. In addition, as means for centering, a guide 12 having a shape that narrows toward the center on both the left and right sides is provided (see FIG. 2). Further, as means for centering, a display that can be checked by visual inspection may be used instead of the recess or the guide. Even in a case where a slight deviation in the left-right direction occurs, since the side surface of the tray T is inclined, the tray T is naturally guided to an appropriate position in a case of being pushed up by the lower sealing and cutting die 25.

In addition, a slide member that is conventionally used in a cutting machine to narrow the width in cooperation with the left and right may be provided at the lower end of the opening portion defined by the shutter disposed in the portion including the region of the measuring means 1 between the measuring means 1 and the packaging means 2, and means for correcting the centering in a case where the centering is deviated at the start of the conveyance may be provided.

The tray T that has been subjected to the packaging process by heat welding is transferred from the packaging means 2 to the downstream region 3 as shown in FIG. 5. As shown in FIG. 6, the downstream region 3 is composed of a conveyor belt and functions as discharge means for moving the tray T outside the device frame, and the label attachment means 7 for printing and attaching the product label is provided above the downstream region 3. Therefore, the downstream region 3 can also be regarded as the label attachment means 7. As described above, the tray T is transferred in the carry-out direction orthogonal to the carry-in direction by the downstream region 3 and is discharged toward the first discharge stage 4. The first discharge stage 4 shown in FIGS. 1 and 3 includes a drive roller and moves the tray T in a direction opposite to the carry-in direction to send the tray T to the second discharge stage 5. The second discharge stage 5 is inclined, and the tray T moves by its own weight, so that the rollers of the second discharge stage 5 are merely rollers without a driving force.

In summary, for the device frame having the packaging means 2, in FIG. 4, the film holding means 211 for holding the film for packaging the container and the surplus film winding means 212 for winding the remaining film in a case of sealing the container are disposed above the device frame in a form corresponding to the front-rear disposition of the measuring means 1 and the packaging means 2 indicated by a broken line region, thereby collectively constituting the film suspending means 21.

As shown in FIGS. 1 and 4, the film suspending means 21 is disposed to be within the upper portion of the device frame on which the measuring means 1 and the packaging means 2 are disposed. The film is suspended in the same direction as the direction in which the measuring means 1, the packaging means 2, and the downstream region 3 are arranged in a vertical direction from the front side toward the rear side of the device. That is, the suspension direction of the film is the same as the conveyance direction of the tray T. In the related art, the film suspending means in the packaging device is usually disposed to protrude greatly in a region outside the device frame on which the packaging means or the like is disposed, but the present embodiment greatly contributes to space saving. The film suspending means 21 is configured to be within the upper region of the measuring means 1 and the packaging means 2, but the configuration may be such that the range of the surplus film winding means 212 extends to the downstream region 3 or the console 6 is disposed at a different position to cause the film holding means 211 to protrude further forward. Even with such a configuration, it can be regarded as a technical idea for space saving that is distinguishable from the related art in which the film suspending means is disposed to protrude greatly in a region outside the device frame. In addition, even in a disposition in which the front-rear direction of the film holding means 211 and the surplus film winding means 212 is reversed, the space saving is not impaired, and the film holding means 211 may be configured to be disposed rearward and the surplus film winding means 212 may be configured to be disposed forward.

In addition, as shown in FIG. 5, the present embodiment adopts a disposition configuration in which the film fed from the film holding means 211 is given a constant tension by a dancer roller DR to stabilize the tension, is wound around two film feeding shafts to pass through the vicinity of the lower side of the mounting means, and is wound by the surplus film winding means 212. The dancer roller DR functions as adjustment means for adjusting the tension of the film, and is disposed above the measuring means 1 and below the film holding means 211.

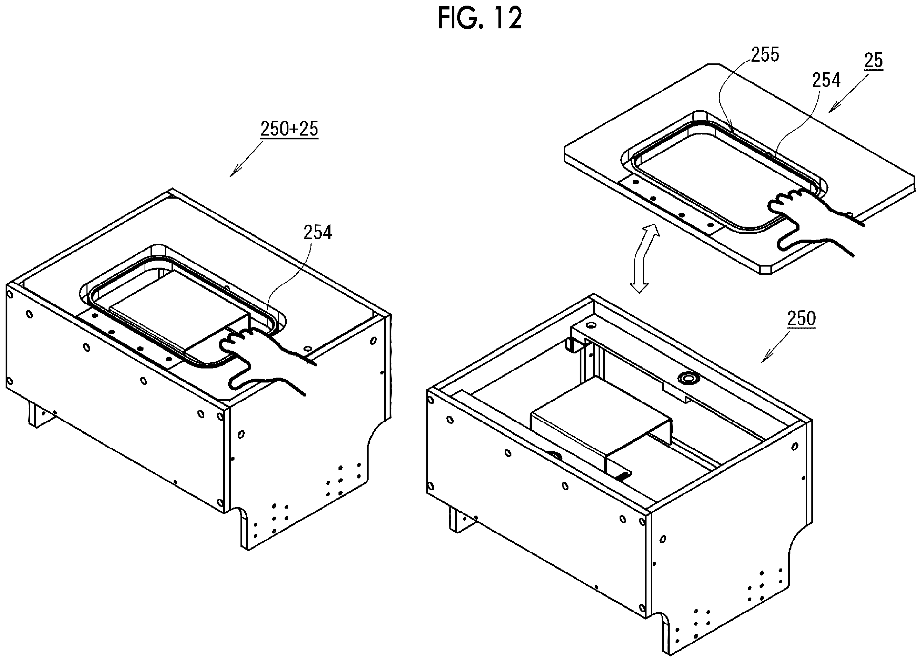

In FIG. 1, a side panel SP is supported by a right long side portion and is configured to be rotatable rearward. With this configuration, the film roll can be replaced from the right side surface, and as will be described later, the upper sealing and cutting die 24 and the lower sealing and cutting die 25 can also be replaced from the right side surface. As described above, the upper sealing and cutting die 24, the film holding means 211, and the surplus film winding means 212 are attachable and detachable from the same direction in a direction along the winding shaft in a case of being replaced. The lower sealing and cutting die 25 is replaced by being inserted from the right side surface and then slightly dropping down (see also FIG. 12). The label attachment means 7 is configured to be able to be tilted (rotated) rearward, and is configured to easily replace the film roll or replace the upper sealing and cutting die 24 and the lower sealing and cutting die 25. In addition, with the rotatable configuration, the label can also be easily replaced. The rotatable side panel SP may be disposed on the left side instead of the right side. That is, the rotatable side panel SP may not be provided on the same side as the side on which the first discharge stage 4 or the like is disposed. However, it is advantageous in terms of space saving to configure the side panel SP on the same side as the side on which the first discharge stage 4 or the like is disposed to be rotatable.

A top plate panel UP, a front panel FP, and the side panel SP of the device frame are formed of a transparent material or are provided with a transparent plate to be fitted, so that a state of the film suspended by the film suspending means 21 can be checked. In addition, the top plate panel UP is configured to be slidable to a position that does not contact the label attachment means 7 toward the rear side in order to be able to deal with a trouble or the like in addition to visual inspection, and the front panel FP is also configured to be supported at the upper side and to be rotatable. The front panel FP may be configured to be rotatable by being supported at the lower side or may be configured to be slidable.

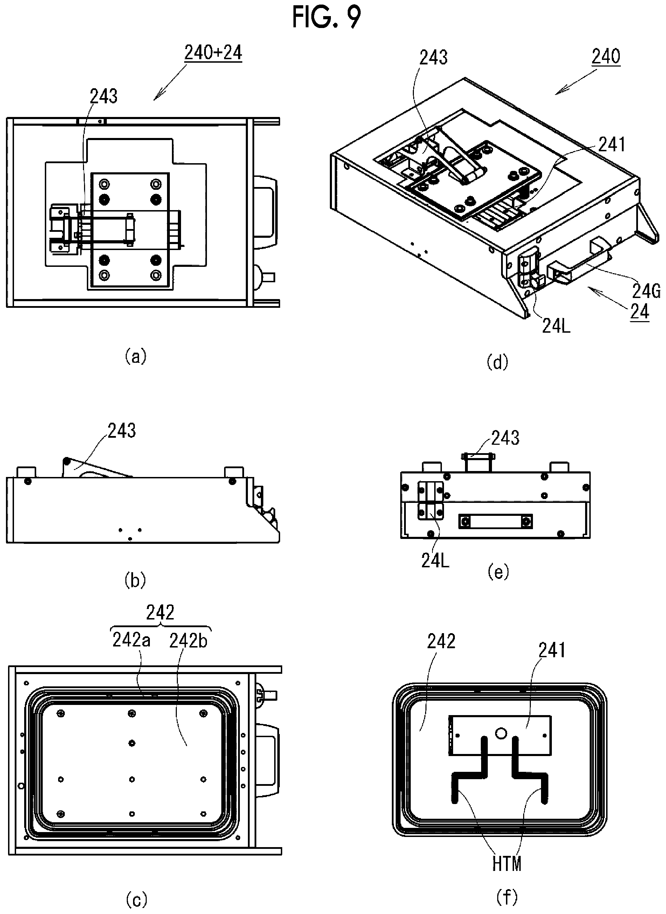

As shown in FIGS. 5 and 6, an upper sealing and cutting die holder 240 in which the upper sealing and cutting die 24 is loaded is provided between the film suspending means 21 and a conveyance space of the tray T (by the infeed bars IB). Locking means for locking the upper sealing and cutting die 24 after the upper sealing and cutting die 24 is loaded in the upper sealing and cutting die holder 240 such that the upper sealing and cutting die 24 cannot be removed is provided in the upper sealing and cutting die holder 240. In order to remove the upper sealing and cutting die 24, it is necessary to operate a lock release lever 24L (see FIG. 9). The lock release lever 24L is configured to be unable to perform the lock release operation in a situation that is not appropriate in conjunction with various types of processing on the sealing and cutting die described later. In addition, the lock release lever 24L may be configured as automatic locking means, and in a case of being configured as the automatic locking means, it may be configured to associate the locking operation with the temperature of the upper sealing and cutting die 24 in various types of processing on the sealing and cutting die described later.

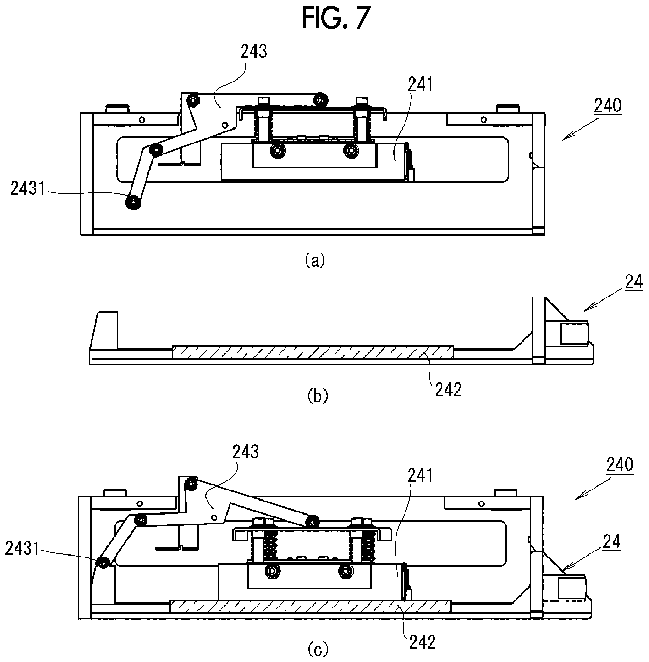

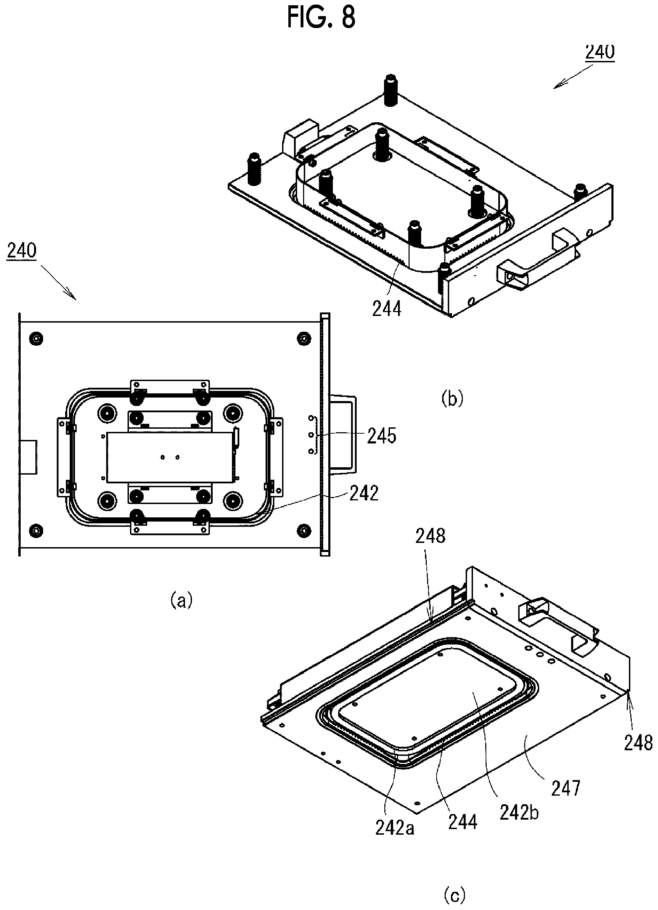

Heater means 241 (see FIG. 7) for supplying heat for film welding is provided in the upper sealing and cutting die holder 240. A metal plate 242 (see FIG. 7) that transmits the heat supplied from the heater means 241 and film cutting means 244 (see FIG. 8) for cutting the film are provided in the upper sealing and cutting die 24. The heater means 241 is in contact with the metal plate 242 of the upper sealing and cutting die 24 loaded in the upper sealing and cutting die holder 240. The metal plate 242 has a protrusion portion 242a having a size corresponding to the edge portion of the tray T and a central portion 242b surrounded by the protrusion portion 242a, and transmits the heat supplied from the heater means 241 to the protrusion portion 242a to heat-weld the film in contact with the edge portion of the tray T.

In the embodiment of the present invention, aluminum having a high thermal conductivity is adopted as the material of the metal plate 242, but silver, copper, gold, or the like having a higher thermal conductivity is not prevented from being adopted, and a material having a lower thermal conductivity than aluminum is not prevented from being adopted as long as there is no practical problem.

In the embodiment of the present invention, the structure of the metal plate 242 includes the protrusion portion 242a corresponding to the edge portion of the tray T and has an uneven shape, but the protrusion portion 242a and the central portion 242b are basically a single-plate structure composed of one member. However, the metal plate may be configured to be composed of two plates bonded to each other and to have a heat pipe arranged between the two plates to conduct heat from the heater more quickly and more uniformly over a wider range. In addition, since the metal plate 242 welds the film and the container by the protrusion portion 242a functioning as the top sealing portion, the central portion 242b, which is a place other than the protrusion portion 242a, does not need to be at a high temperature. On the contrary, in consideration of a concern that the central portion 242b may dissipate heat, it is suitable to be configured to fix a member that is a heat insulating material to the central portion 242b, and it may be configured in this way.

The lower sealing and cutting die 25 is provided below the upper sealing and cutting die holder 240 across the conveyance space of the tray T. The lower sealing and cutting die 25 pushes up the tray T and sandwiches the film sequentially fed from the roll film R loaded in the film suspending means 21 between the metal plate 242 of the upper sealing and cutting die 24 and the lower sealing and cutting die 25 to perform the packaging process (top sealing process). As described above, the packaging means 2 is configured by the film suspending means 21, the upper sealing and cutting die 24, and the lower sealing and cutting die 25, and the packaging means 2 is disposed continuously on the downstream side of the measuring means 1 in the conveyance direction.

In the present embodiment, the roll film R is supported by the shaft of the film holding means 211 through the center hole thereof. In a case where the fed film is sealed and cut to the size of the tray T, the film is in a waste state in which only a cut portion remains, that is, a state in which the inside is hollowed out. The waste state film is sequentially wound by the surplus film winding means 212.

The metal plate 242 (see FIG. 7) that performs the function of the top sealing is disposed to face the fed film. In a case where the tray T is moved upward by the lower sealing and cutting die 25, the film is heat-welded to the edge portion of the tray T along the edge portion of the tray T in a state of being sandwiched between the lower sealing and cutting die 25 and the metal plate 242 (see FIG. 7) of the upper sealing and cutting die 24. Before the heat welding, a gas replacement process of injecting an inert gas for extending the best-before date of the product to be packaged into the space formed between the film and the tray T to replace the air with the inert gas is performed, but this will be described later.

### (Conveyance Operation by Infeed Bars)

As shown in FIG. 5, the infeed bars IB that are conveyance mechanisms of the tray T are bridged at four positions in the circumferential direction with respect to two chains on the left and right that can circulate the entire front and rear periphery from the front side of the measuring means 1 to the rear side of the packaging means 2, and are configured to transfer the tray T from the measuring means 1 to the packaging means 2 and then from the packaging means 2 to the downstream region 3 by the chains circulating. A roller 31 is disposed in a space generated between the packaging means 2 and the downstream region 3, and the tray T can smoothly move from the packaging means 2 to the downstream region 3. Since the packaging target is almost food, the metal infeed bars IB are subjected to an antibacterial treatment and a rust prevention treatment. The infeed bars IB are connected to the chains via eight infeed bar support members IB1 provided at four positions in the circumferential direction of the two chains on the left and right.

As described above, the conveyance operation of the infeed bars IB that are connected to the chains serving as the drive means and that circulate and the opening and closing operation of the shutter 11 will be described. The shutter 11 is closed in a standby state. In a case where the measuring means 1 performed the measurement, the shutter 11 descends to communicate the inside and outside of the housing. The tray T placed on the measuring means 1 is pushed by one of the infeed bars IB and is transferred to the packaging means 2, and the infeed bar IB is stopped. In this state, in a case where the lower sealing and cutting die 25 described later performs an upward movement operation, the infeed bar IB interferes with the lower sealing and cutting die 25, so that the infeed bar IB retreats once to the region in which the measuring means 1 is located. As described above, the disposition interval of the infeed bars IB in the circumferential direction is an interval at which the infeed bar IB does not interfere with the next product to be packaged placed on the measuring means 1 in a case where the infeed bar IB performs an operation of retreating once. At a point in time when the infeed bar IB retreats once, the shutter 11 rises from below the front side portion of the device frame to block the outside and the inside, and the safety is ensured. The blocking state by the shutter 11 is continued until the next product is measured.

Due to the structure of the infeed bars IB that are intermittently disposed in the circumferential direction, the shutter configuration that rises from the bottom to perform the closing operation is realized by avoiding the chain portions that are continuously disposed in the circumferential direction. After the top sealing of the tray T by the packaging means 2, the infeed bar IB advances again to transfer the tray T to the downstream region 3. Ar this time, the roller 31 is present, so that the tray T is smoothly transferred without falling into the space between the packaging means 2 and the downstream region 3. The height of the infeed bars IB with respect to the placement surface of the tray T is configured to be located at the center of the height of the bottom surface and the height of the top surface of the tray T, but the height may be appropriately changed as long as the tray T can be stably conveyed. The present embodiment having such a configuration can convey the product to be packaged from the measuring means to the downstream region through the packaging means by single conveyance means, and greatly contributes to space saving and cost reduction.

### (Gas Replacement and Packaging Operation by Upper Sealing and cutting die and Lower Sealing and Cutting Die)

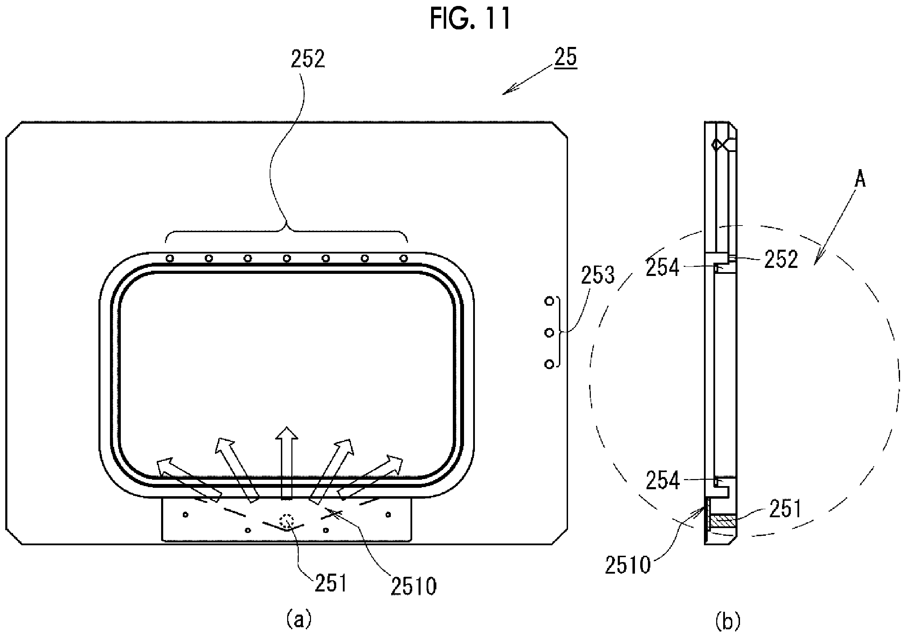

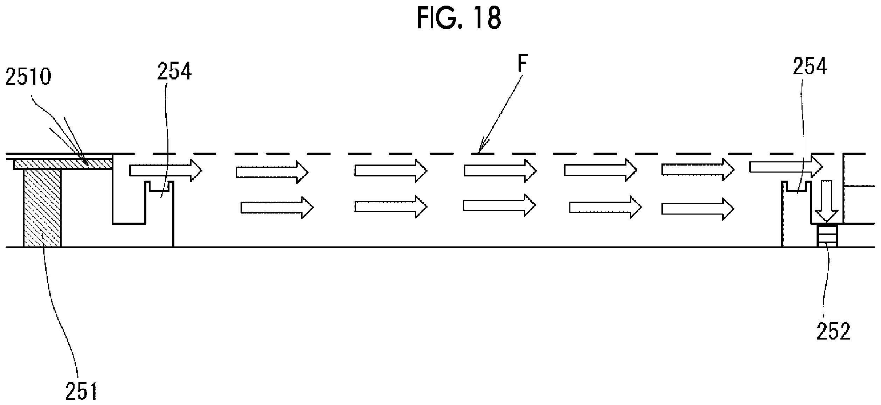

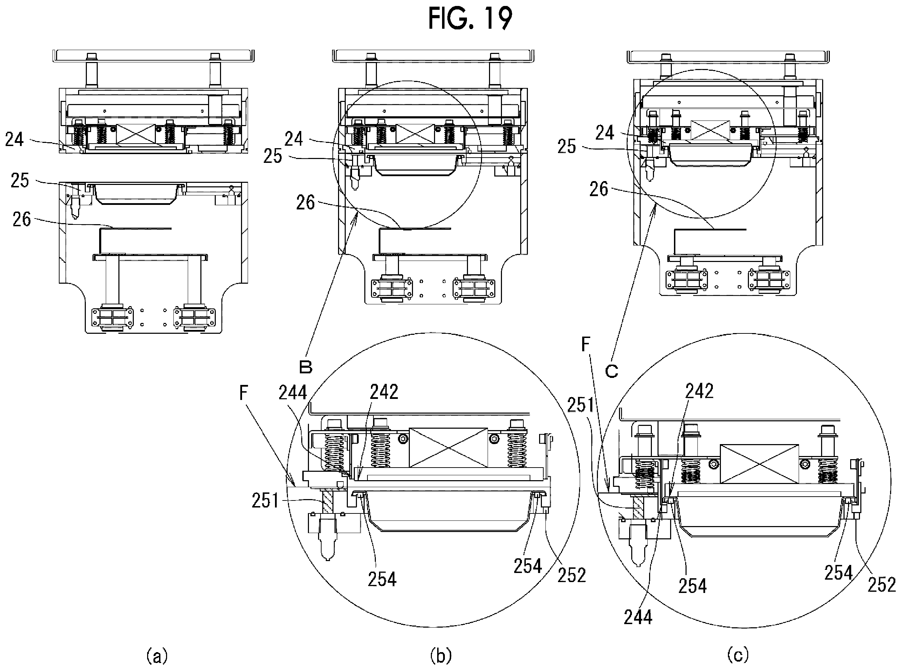

FIG. 7 is a front sectional view showing an upper sealing and cutting die and an upper sealing and cutting die holder, in which FIG. 7(a) shows the upper sealing and cutting die holder in a case where the upper sealing and cutting die is not loaded, FIG. 7(b) shows the upper sealing and cutting die alone, and FIG. 7(c) shows a state in which the upper sealing and cutting die is loaded in the upper sealing and cutting die holder. FIG. 8 is a view showing the upper sealing and cutting die, in which FIG. 8(a) is a top view, FIG. 8(b) is an upper perspective view, and FIG. 8(c) is a lower perspective view. FIG. 11 is a view showing a lower sealing and cutting die, in which FIG. 11(a) is a top view and FIG. 11(b) is a side sectional view. FIG. 18 is an enlarged view of a portion A of FIG. 11(b), but is shown in a state where the lower sealing and cutting die is rotated by 90 degrees and is horizontally disposed. FIG. 19 is a side sectional view showing a change in state in a case where the lower sealing and cutting die is pushed up against the upper sealing and cutting die.

As can be understood from the comparison between FIGS. 7(a) and 7(c), which are front sectional views, the upper sealing and cutting die 24 is loaded in the upper sealing and cutting die holder 240 in a manner of being inserted from the right side. That is, as described above, the upper sealing and cutting die 24 is attachable and detachable from the right side of FIG. 1 in the same direction in a direction along the winding shaft, as in the film holding means 211, and the surplus film winding means 212. In addition, as shown in FIG. 7(b), the upper sealing and cutting die includes the metal plate 242 that transmits the heat supplied from the heater means 241 to perform the function of the top sealing and the film cutting means 244 for cutting the film. As shown in FIG. 8, the metal plate 242 is a chamfered rectangular shape in order to correspond to the edge portion of the tray T, and the film cutting means 244 is disposed on the outer periphery thereof. In addition, the metal plate 242 is composed of the protrusion portion 242a having a size corresponding to the edge portion of the tray T and the central portion 242b surrounded by the protrusion portion 242a. The film cutting means 244 can cut the welded film to the size of the tray T. The heat from the heater means 241 is transmitted only to the metal plate 242, but a structure in which the heat is transmitted to other metal portions is not excluded.

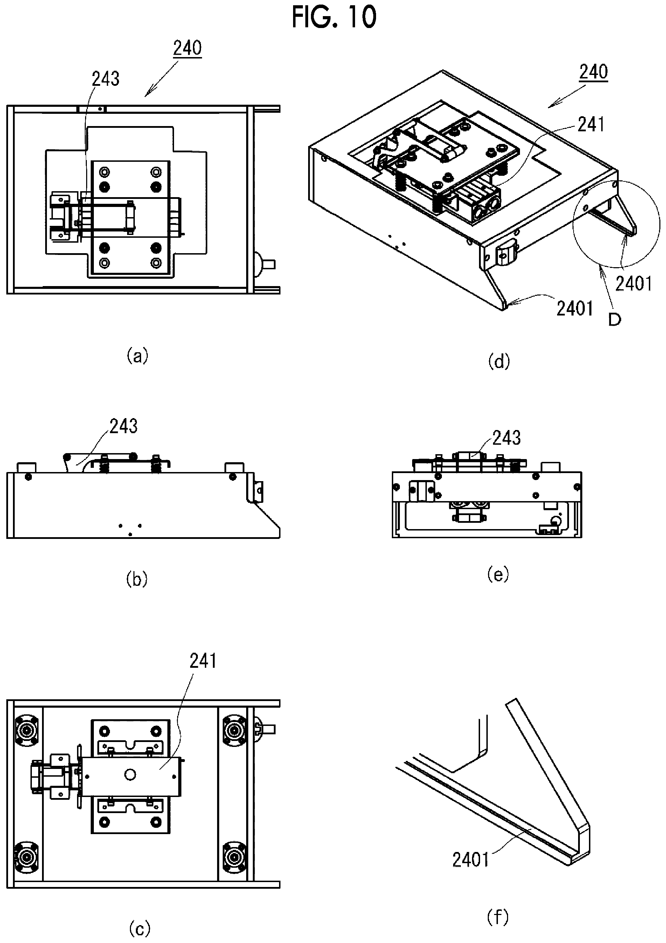

As shown in FIG. 7(a), in a case where the upper sealing and cutting die 24 is not loaded, the heater means 241 for supplying heat for film welding is located above by biasing means (not shown) (see also FIGS. 10(b) and 10(d)). Here, in a case where the upper sealing and cutting die 24 shown in FIG. 7(b) is inserted from the right direction of the drawing, the contact portion of the distal end of the upper sealing and cutting die 24 comes into contact with a roller 2431 of the distal end of a heater link 243, and the heater link 243 presses the heater means 241 downward as shown in FIG. 7(c) (see also FIGS. 9(b) and 9(d)). As a result, the heater means 241 comes into contact with the metal plate 242 of the upper sealing and cutting die 24 and can transmit the heat for welding to the metal plate 242.

In the embodiment of the present invention, the heater means 241 is means in which a hole is formed in an aluminum material and a cartridge heater is inserted into the hole (see also FIG. 10(d)). However, a silicon rubber heater, a plate heater, a plug-type heater, a sheath heater, or the like can also be adopted. Furthermore, as the heater type, an aspect of a convection type or a radiation type may be adopted other than the heat conduction type, and is not limited to the heat conduction type.

In addition, the heater means may be configured to directly contact the metal plate 242 of the upper sealing and cutting die 24, or may be configured to indirectly contact the metal plate 242 by adding a member having a good thermal conductivity, for example, a heat transfer member of gold, silver, copper, or aluminum, to the metal plate 242. For example, in a case where the expansion of the heater means is small as compared with the size of the rectangular shape portion as the expansion of the metal plate 242, the region in which the heat is transferred is limited to the vicinity of the center, and the efficiency is not good. Therefore, a heat transfer member HTM having a good thermal conductivity and a size that is not inferior to the expansion of the metal plate 242 is interposed between the heater means and the metal plate 242, so that the area in which the heat is transferred can be effectively expanded (see also FIG. 9(f)).

As shown in FIG. 8, the upper sealing and cutting die 24 includes the chamfered rectangular metal plate 242 having a size and a shape corresponding to the edge portion of the tray T, and the metal plate 242 is composed of the protrusion portion 242a having a size corresponding to the edge portion of the tray T and the central portion 242b surrounded by the protrusion portion 242a. In the present embodiment, an upper sealing and cutting die 24A for a large tray having a tray size of a width of 150 mm and a depth of 150 mm, an upper sealing and cutting die 24B for a medium tray having a tray size of a width of 150 mm and a depth of 120 mm, and an upper sealing and cutting die 24C for a small tray having a tray size of a width of 120 mm and a depth of 120 mm are prepared (FIG. 8 shows the upper sealing and cutting die 24B corresponding to the "medium"-sized tray).

The metal plate 242 transmits the heat supplied from the heater means 241 disposed in the upper sealing and cutting die holder 240 (see FIG. 7) to the film to perform the top sealing. A cutting blade as the film cutting means 244 for cutting the film after the top sealing is provided on the outer periphery of the chamfered rectangular-shaped metal plate 242. The upper sealing and cutting die 24 body, the metal plate 242, and the film cutting means 244 are biased downward by different biasing forces with respect to the upper sealing and cutting die holder 240, and are configured to be able to move relatively in the vertical direction independently of each other. In a case where the tray T is pushed upward by bringing the edge portion of the tray T into contact with a tray edge support portion 254 (see FIGS. 11 and 18) of the lower sealing and cutting die 25, first, the lower sealing and cutting die 25 comes into contact with the peripheral bottom plate of the upper sealing and cutting die 24, then the edge of the tray T comes into contact with the metal plate 242, and finally, the film pushed upward by the tray T comes into contact with the film cutting means 244. In the upper sealing and cutting die 24, three upper sealing and cutting die holes 245 for detecting the size of the die are provided, and one of the holes is filled depending on the size. The hole that is not filled is a light-pass-through portion, and the hole that is filled functions as a light-shielding portion or a reflecting portion.

In a case of attaching the upper sealing and cutting die 24 to the upper sealing and cutting die holder 240, the upper sealing and cutting die 24 can be easily loaded by temporarily placing a notch portion 248 provided at the lower ends of the left and right sides of the upper sealing and cutting die 24 on rails 2401 of the inner surfaces of the left and right sides of the upper sealing and cutting die holder 240 and then performing a slide operation (see also FIGS. 10(d) and 10(f)). In addition, in a case of removing the upper sealing and cutting die 24 from the upper sealing and cutting die holder 240, the upper sealing and cutting die 24 can be easily removed by pushing down the lock release lever 24L shown in FIG. 9 to release the lock, and then gripping a pulling-out grip portion 24G and sliding it to remove it.

FIGS. 9 and 10 show a state in which the upper sealing and cutting die is loaded in the upper sealing and cutting die holder and a state in which the upper sealing and cutting die is not loaded in the upper sealing and cutting die holder. FIG. 9 is a view showing a state in which the upper sealing and cutting die is loaded in the upper sealing and cutting die holder, in which FIG. 9(a) is a top view, FIG. 9(b) is a front view, FIG. 9(c) is a bottom view, FIG. 9(d) is an upper perspective view, FIG. 9(e) is a right side view, and FIG. 9(f) is a conceptual view showing a heat transfer member. FIG. 10 is a view showing a state in which the upper sealing and cutting die is not loaded in the upper sealing and cutting die holder, in which FIG. 10(a) is a top view, FIG. 10(b) is a front view, FIG. 10(c) is a bottom view, FIG. 10(d) is an upper perspective view, FIG. 10(e) is a right side view, and FIG. 10(f) is an enlarged view of a portion D of FIG. 10(d). In FIG. 9, a state in which the upper sealing and cutting die 24A corresponding to the "large"-sized tray is loaded is shown, unlike in FIG. 8.

As can be seen from the comparison between FIG. 9(b) and FIG. 10(b) or as can be seen from the comparison between FIG. 9(d) and FIG. 10(d), in a state in which the upper sealing and cutting die 24 is loaded, as shown in FIGS. 9(b) and 9(d), the heater link 243 presses the heater means 241 downward, whereas in a state in which the upper sealing and cutting die 24 is not loaded, as shown in FIGS. 10(b) and 10(d), the heater means 241 is located above by the biasing means (not shown), so that the heater link 243 also bounces upward.

FIG. 9(c) shows a state in which the metal plate 242 is composed of the protrusion portion 242a having a size corresponding to the edge portion of the tray T and the central portion 242b surrounded by the protrusion portion 242a. In addition, in FIG. 10(d), a state is shown in which the heater means 241 is located above by the biasing means (not shown), and a hole for inserting the cartridge heater can be seen.

The metal plate 242 shown in FIG. 9(c) is greatly expanded in the up-down and left-right directions in the drawing, whereas the heater means 241 shown in FIG. 10(c) is not expanded, particularly not in the up-down direction. Therefore, as shown in FIG. 9(f), the heat transfer member HTM having a good thermal conductivity and a size that is not inferior to the expansion of the metal plate 242 is interposed between the heater means 241 and the metal plate 242, so that the area in which the heat is transferred can be effectively expanded.

As shown in FIGS. 11(a) and 11(b), the lower sealing and cutting die 25 includes a gas injection port 251, a gas diffusion section 2510 connected to the gas injection port 251, and an air discharge port 252, for performing a gas replacement process (gas flush). Since a region including the gas injection port 251 and the gas diffusion section 2510 is covered with a cover, the gas injection port 251 and the gas diffusion section 2510 are shown by broken lines in FIG. 11(a). Since the gas diffusion section 2510 has a triangular shape in the top view, the gas is given diffusibility to easily spread in the lateral direction of the tray as indicated by the white arrow in the drawing. In FIG. 18, F shown by a broken line is a film, and simultaneously indicates a film holding surface. However, since a cover that covers the gas diffusion section 2510 and the like is located at the left end of the broken line, the portion is shown by a solid line. In addition, as shown by the white arrow in FIG. 18, the gas is diffused by the gas diffusion section 2510 to enter the inside of the tray T and is sent rearward, and finally changes direction downward and is discharged from a plurality of the air discharge ports 252. The gas injection port 251 is disposed in front (corresponding to the long side of the tray), whereas the air discharge port 252 is disposed in the rear (corresponding to the long side of the tray facing the tray), but may be configured to be disposed on the side (on both the left and right sides or on one side) corresponding to the short side of the tray. In addition, the air discharge port 252 communicates downward, but may be configured to communicate rearward.

In the lower sealing and cutting die 25, as shown in FIG. 11(a), three lower sealing and cutting die holes 253 for detecting the size of the die are provided, and one of the holes is filled depending on the size. The hole that is not filled is a light-pass-through portion, and the hole that is filled functions as a light-shielding portion or a reflecting portion. The tray T is raised by being supported by the tray edge support portion 254 provided inside the lower sealing and cutting die 25 at the edge portion thereof. The center of the lower sealing and cutting die 25 is penetrated in the up-down direction, and the container bottom surface support portion 26 is fixedly provided on the housing at this position (see FIG. 19).

A method of attaching and detaching the lower sealing and cutting die will be described with reference to FIG. 12. FIG. 12 is a perspective view showing a state where the lower sealing and cutting die is attached to and detached from a lower sealing and cutting die holder. As shown in the drawing, in a state in which the lower sealing and cutting die 25 is loaded in the lower sealing and cutting die holder 250, the lower sealing and cutting die 25 can be easily attached to and detached from the lower sealing and cutting die holder 250 by gripping the hole into which the tray inside the tray edge support portion 254 of the lower sealing and cutting die 25 falls, that is, by gripping the upper surface, the lower surface, and the inner surface, which are the peripheral portions, as the grip portion.

The upper sealing and cutting die 24, the upper sealing and cutting die holder 240, and the lower sealing and cutting die 25 cooperate with each other to push up the tray T, perform the gas replacement process for extending the best-before date of the product to be packaged, and then perform the packaging process. The operation will be described. FIG. 19 is a side sectional view showing a change in state in a case where the lower sealing and cutting die is pushed up against the upper sealing and cutting die, in which FIG. 19(a) shows a state in which the lower sealing and cutting die 25 is slightly raised from the lowermost position, FIG. 19(b) shows a state in which the lower sealing and cutting die 25 is largely raised and contacts the film F to form a closed space, and FIG. 19(c) shows a state in which the lower sealing and cutting die 25 continues to rise, contacts the metal plate 242, and is further raised to cut (hollow out) the film F by the film cutting means 244. In FIGS. 19(b) and 19(c), enlarged views of portions B and C are shown below.

The tray T conveyed from the measuring means 1 by the infeed bar IB is initially supported by the container bottom surface support portion 26 at the bottom surface thereof. Thereafter, in a case where the lower sealing and cutting die 25 is raised, the support of the bottom surface of the tray T by the container bottom surface support portion 26 is succeeded by the support of the edge portion of the tray T by the tray edge support portion 254 of the lower sealing and cutting die 25 as shown in FIG. 19(a). Thereafter, in a case where the lower sealing and cutting die 25 is raised to the position shown in FIG. 19(b), the closed space is formed by the lower sealing and cutting die 25 and the film F, and the inert gas for replacing the air present in the space formed between the film F and the tray T is transmitted through the gas injection port 251 and the gas diffusion section 2510 and is injected, while the air is discharged from the air discharge port 252. As a result, the gas replacement process (gas flush) for extending the best-before date of the product to be packaged is executed. The lower sealing and cutting die 25 continues to rise, and the edge portion of the tray T comes into contact with the metal plate 242 of the upper sealing and cutting die 24 (this state is not shown, and the lower sealing and cutting die 25 is located at a height position between FIGS. 19(b) and 19(c)). In this state, while the top sealing is performed, or after the top sealing is performed, the lower sealing and cutting die 25 further rises, and the surplus length portion around the top-sealed film is cut by the film cutting means 244. From FIG. 19(c), it can be seen that the blade tip of the film cutting means 244 is located below the film F and the edge portion of the tray T in a state in which the metal plate 242 of the upper sealing and cutting die 24 and the tray edge support portion 254 of the lower sealing and cutting die 25 sandwich the film F and the edge portion of the tray T. The operation mechanism in which the edge portion of the tray T first comes into contact with the metal plate 242 and then comes into contact with the film cutting means 244 is achieved by setting a biasing force of the metal plate 242 in the downward direction to be weaker than a biasing force of the film cutting means 244 and by configuring the metal plate 242 to retreat upward with respect to the film cutting means 244. Although not shown, in a case where the lower sealing and cutting die 25 descends, the support of the edge portion of the tray T by the tray edge support portion 254 of the lower sealing and cutting die 25 is succeeded by the support of the bottom surface of the tray T by the container bottom surface support portion 26, and then the tray T is conveyed to the downstream region 3 by the infeed bar IB.

### (Suitability Detection of Upper and Lower Sealing and Cutting Dies)

As described above, in the embodiment of the present invention, three types of upper sealing and cutting dies and lower sealing and cutting dies are prepared in order to correspond to three types of trays T having different sizes, that is, "large", "medium", and "small". The upper sealing and cutting die 24 is replaceable by being directly inserted from the right side surface of the side panel SP, and the lower sealing and cutting die 25 is replaceable by being inserted from the right side surface of the side panel SP and then slightly dropping down. Here, the question is whether the sealing and cutting die of the correct size is loaded. Therefore, in the embodiment of the present invention, a technique is provided that can detect whether the correct upper sealing and cutting die 24 and the correct lower sealing and cutting die 25 are loaded. That is, as shown in FIG. 8, three upper sealing and cutting die holes 245 are provided in the upper sealing and cutting die 24, and as shown in FIG. 11, three lower sealing and cutting die holes 253 are provided in the lower sealing and cutting die 25. One of the respective three holes is filled depending on the size. At portions corresponding to both ends of the three holes, light emitting elements are provided below the lower sealing and cutting die 25, and light receiving elements are provided above the upper sealing and cutting die 24. At a portion corresponding to the center, a light emitting element is provided above the upper sealing and cutting die 24, and a light receiving element is provided below the lower sealing and cutting die 25. Two lights are received under normal circumstances, but, in a case where the upper sealing and cutting die 24 and the lower sealing and cutting die 25 do not correspond, one of the two lights that should be received is blocked, so that the upper and lower sealing and cutting dies are not suitable, and this can be detected. As a premise, the size of the sealing and cutting die that is loaded with the upper and lower parts aligned with the positions of the holes can also be detected and determined, and the notification is performed by notification means such as display means, a voice guide, or communication to an external device as necessary.

In the present embodiment, the traveling direction of the light is reversed at the portion corresponding to both ends and the portion corresponding to the center, in order to suppress interference between adjacent lights, but the directions of the three lights may be aligned in a case where there is no concern about the interference of the light. In addition, one of the three holes is filled depending on the size, but two holes may be filled. However, it is a desirable aspect that one hole is filled and two holes are detected because the possibility of determining various different situations is increased. Further, an aspect may be reflective sensors not combinations of the light emitting elements and the light receiving elements, and in this case, the holes to be filled are reflecting portions, not light-shielding portions. In addition, the upper and lower sealing and cutting dies may be configured to be determined by capturing the features of the upper and lower sealing and cutting dies by another optical means, for example, imaging elements, instead of light sensors, and performing image analysis, and in this case, even in a state in which the upper and lower dies are not aligned and are in a mismatched state, the upper and lower dies can be determined separately. According to the present embodiment having such a configuration, it is possible to provide a packaging device having high effectiveness without stopping the line due to the unsuitability of the upper and lower sealing and cutting dies.

As an aspect in which a problem occurs, another error may occur other than the mismatch of the upper and lower sealing and cutting dies. In a busy period at the site, other work may interrupt the packaging work, and the operator may be forced to perform other work, or the sealing and cutting die may be forgotten to be loaded due to an unfamiliar operator operating the sealing and cutting die. Then, even though the sealing and cutting die is forgotten to be loaded, the operator may think that the sealing and cutting die has been replaced and may attempt to resume the work. However, in the embodiment of the present invention, in a case where neither the upper nor lower sealing and cutting dies are loaded, the light is not blocked for all of the three holes, so that the light emitted from the three light emitting elements is detected by any of the three light receiving elements. By determining the state in which the three sensors are turned on as a case of forgetting to load and notifying the case, it is possible to prevent further work errors due to forgetting to load the upper and lower sealing and cutting dies.

As described above, the mismatch of the upper and lower sealing and cutting dies and the forgetting to load the upper and lower sealing and cutting dies can be detected by the three holes, but in some cases, another aspect of the error may occur. In a case where the interrupt work occurs in the middle of the replacement work, it is also considered that the upper sealing and cutting die is replaced but the lower sealing and cutting die is not replaced and is not loaded, or the reverse pattern occurs. Another example of the suitability detection of the upper and lower sealing and cutting dies in a case where such an error occurs will be described.

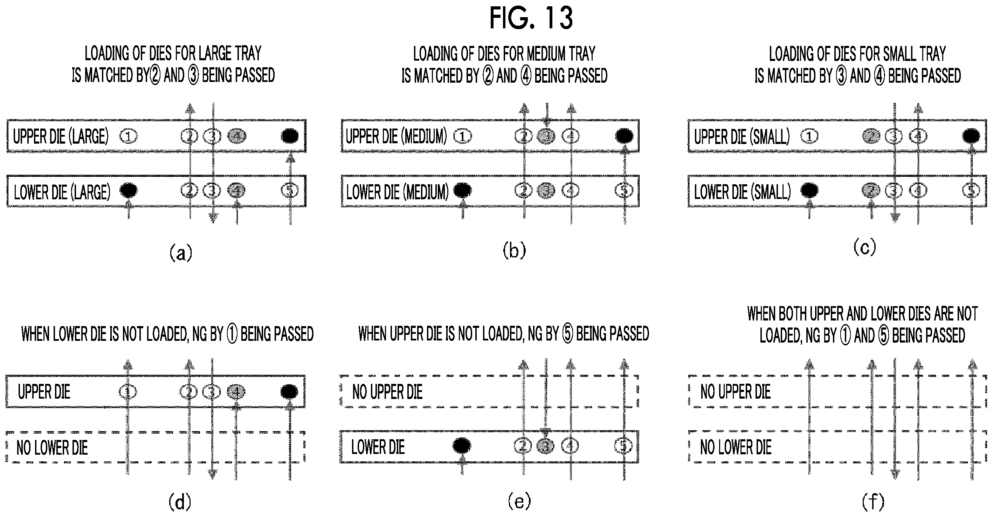

FIG. 13 is an example in which holes are provided at five different positions each for the upper sealing and cutting die hole 245 and the lower sealing and cutting die hole 253. The points that three sets of upper sealing and cutting die holes and lower sealing and cutting die holes for the match determination are required and the operation mechanism in which the match is determined by turning on the two sensors are the same as those in the example described above. In addition, in the other example, a hole for determining that the lower sealing and cutting die is not loaded is provided in the upper sealing and cutting die, and a hole for determining that the upper sealing and cutting die is not loaded is provided in the lower sealing and cutting die. As a result, the control means of the packaging device is configured to determine the state in which the lower sealing and cutting die is not loaded or the state in which the upper sealing and cutting die is not loaded. Of course, it is also possible to determine a state in which neither the upper nor lower sealing and cutting dies are loaded.

The operation mechanism of the determination will be described. Here, the numbers 2 to 4 in a circle (hereinafter, indicated as circled 2 to 4, and the like) are the upper sealing and cutting die holes for match determination or the lower sealing and cutting die holes for match determination. In addition, circled 1 is a hole for determining that the lower sealing and cutting die is not loaded, and circled 5 is a hole for determining that the upper sealing and cutting die is not loaded. The hole of the lower sealing and cutting die at a position facing the hole for determining that the lower sealing and cutting die is not loaded of the upper sealing and cutting die 24 is filled, but may be configured not to form a hole originally. The same applies to the hole of the upper sealing and cutting die at a position facing the hole for determining that the upper sealing and cutting die is not loaded of the lower sealing and cutting die 25.

As shown in FIG. 13(a), in a case where the sensor outputs at the corresponding positions of circled 2 and 3 are turned on, it is determined that the large-sized sealing and cutting die is loaded. In addition, as shown in FIG. 13(b), in a case where the sensor outputs at the corresponding positions of circled 2 and 4 are turned on, it is determined that the medium-sized sealing and cutting die is loaded. In addition, as shown in FIG. 13(c), in a case where the sensor outputs at the corresponding positions of circled 3 and 4 are turned on, it is determined that the small-sized sealing and cutting die is loaded. In addition, although not shown, in a case where only one sensor output is turned on, the sizes of the upper and lower sealing and cutting dies do not match. On the contrary, in a case where three sensor outputs are turned on, it is a case where neither the upper nor lower sealing and cutting dies are loaded. The determination method of the other example described so far is the same operation mechanism even in the example in which only three holes are provided as described above.

In a case where only one of the upper and lower sealing and cutting dies is forgotten to be loaded, only the three sensors cannot detect the case. However, in a case of five sensors, the case can be appropriately detected. That is, as can be understood from FIG. 13(d), in a case where the sensor output of circled 1 is turned on, the upper sealing and cutting die is loaded, but the lower sealing and cutting die is not loaded. On the other hand, as can be understood from FIG. 13(e), in a case where the sensor output of circled 5 is turned on, the lower sealing and cutting die is loaded, but the upper sealing and cutting die is not loaded. In a case where neither the upper nor lower sealing and cutting dies are loaded, as described above, the sensor outputs of circled 2 to 4 are turned on, but in addition to this, the sensor outputs of circled 1 and 5 are also turned on, and all of the five sensor outputs are turned on.

In addition, in both the example in which the holes are three and the other example in which the holes are five, the size information of the container associated with the product information is stored in appropriate storage means, and it is configured to detect that the sizes of the determined upper and lower sealing and cutting dies and the size of the container associated with the called product information are different, and to perform the notification by the notification means as necessary. On the contrary, as a control of not calling the product that does not correspond to the set sealing and cutting die/dies, the product may not be called to make the operator aware that the sealing and cutting die/dies is/are not suitable.

The means for the suitability determination of the sealing and cutting die/dies may not be the optical determination means, may use another physical quantity, or may use both the means for using the hole and another detection means. For example, in a case where a sensor (the method is not limited to a contact switch, an electromagnetic sensor, or the like) that detects that the upper sealing and cutting die is loaded is provided, the sensor of circled 5 shown in FIG. 13 can be omitted. In addition, more intelligent means that uses an imaging element or, conversely, primitive means may be adopted. For example, a configuration in which the weights of the sealing and cutting dies are measured and determined or in which marks or numbers are described on the sealing and cutting dies such that the numbers of the sealing and cutting dies can be checked by visual inspection can be adopted, and the marks for checking may be configured by highly adhesive labels. In addition, even in a case of using the imaging element, the determination may be made by reading the barcodes displayed on the sealing and cutting dies instead of the physical feature of the sealing and cutting dies themselves.

However, in the optical means or the means using another physical quantity, in a case where a sensor that can identify which upper or lower sealing and cutting die is loaded is provided, it is possible to determine which size sealing and cutting die is loaded in each of the upper and lower sealing and cutting die holders, and the guidance on the display screen described later is advantageous. Specific examples of the sensor include a physical sensor corresponding to the size of each sealing and cutting die, a light-pass-through type sensor, and camera means, which can be appropriately adopted.

### (Regarding Determination Timing of Loading State of Upper and Lower Sealing and cutting dies)

In the present embodiment, a technique is provided for making the determination timing of the loading state of the upper and lower sealing and cutting dies effective while considering the device characteristics of the packaging device. In a case where the upper and lower sealing and cutting dies are changed, the packaging device is stopped by pressing an emergency stop button 8, and then the sealing and cutting dies or the film are replaced, but in a case where the emergency stop button 8 is released after the sealing and cutting dies or the like are replaced, the types of the sealing and cutting dies are determined, and in a case where the upper and lower sealing and cutting dies are different, the error notification is performed. In addition, at the time of power-on, the types of the currently set sealing and cutting dies are determined, and the set sealing and cutting die types are displayed, so that the set sealing and cutting dies can be checked at all times. Further, in a case of replacing the sealing and cutting die/dies, the device is configured to perform the notification of cleaning, and in a case where the cleaning command is instructed in response to the notification, the purge process is performed to keep the gas injection port of the sealing and cutting die clean. In addition, a configuration may be adopted in which a gas detection sensor is provided to check whether the gas is appropriately injected, or the air in the entire path up to the injection port is completely changed to the gas by a trial operation.

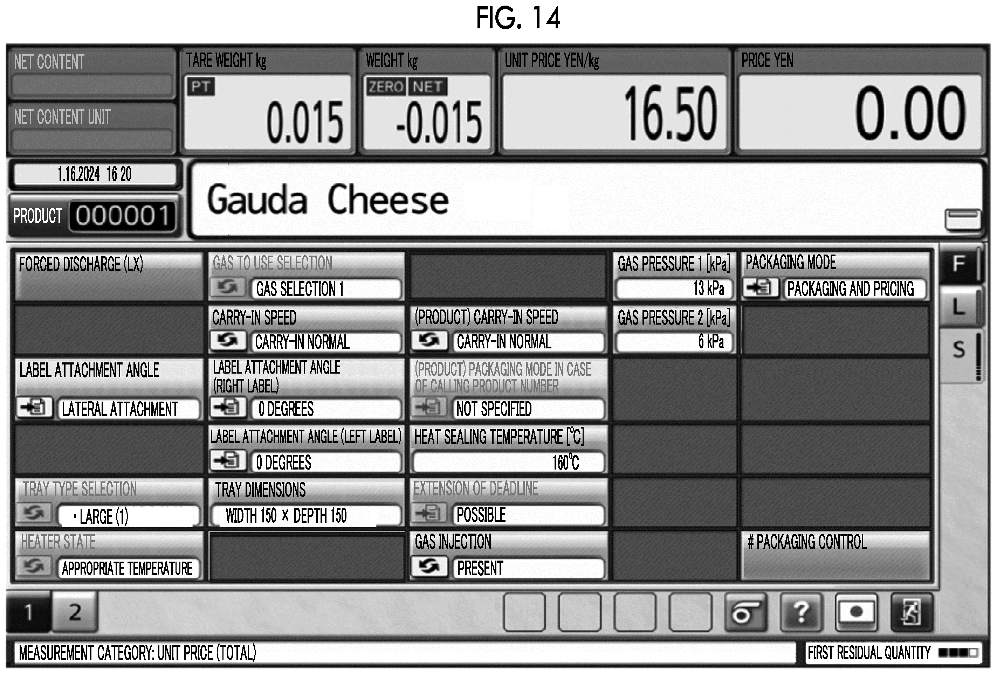

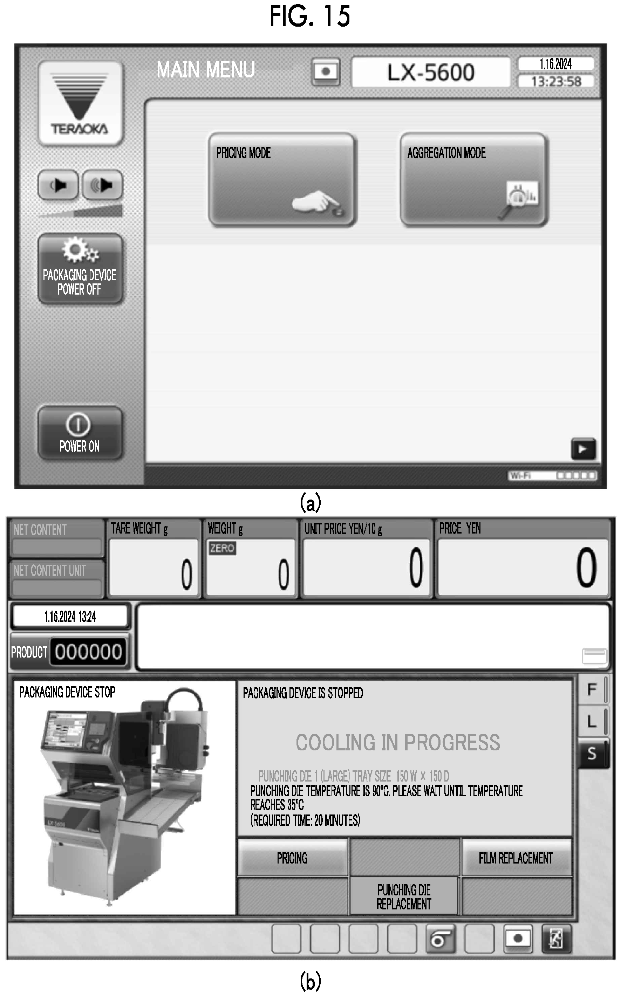

The determination timing of the loading state of the sealing and cutting dies (including the determination of whether the upper and/or lower sealing and cutting dies are not loaded, and the determination of whether the upper and lower sealing and cutting dies match) will be specifically described with reference to the layout example of the display screen. First, the display (notification) of the sealing and cutting dies at the time of power-on will be described. In a case where the device is not operating, first, in a case where the power is turned on, an initial screen such as a date and time check is displayed, the main menu shown in FIG. 15(a) is displayed, and it is possible to select a "packaging and pricing mode" in which the packaging and the pricing are performed, a "packaging mode" in which only the packaging is performed, or a "pricing mode" in which only the label for pricing is issued without the packaging. Here, a screen example immediately after the "pricing mode" is selected is shown. In a case where the packaging operation and the button of the pricing mode in which the pricing is performed are pressed, the device transitions to a reset mode (not shown) and performs a reset operation, and during the reset operation, the determination of whether the upper and/or lower sealing and cutting dies are not loaded or the determination of whether the upper and lower sealing and cutting dies match is performed, and the determination result is displayed or notified. The determination timing can be changed to any timing such as an initial operation or a display of the main menu even in a case where the reset operation is not being performed. In particular, the packaging device includes storage means for storing size information of containers associated with product information, and it is convenient to perform the notification in a case where the sizes of the loaded sealing and cutting dies and the size of the containers associated with called product information are different from each other. However, in a case where the product information is called, the product is confirmed while displaying the next candidate and the subsequent candidate a few times while checking the screen, but if the determination or the notification is performed each time the candidate is displayed in a stage before the confirmation, the warning may be considered excessive, so it is desirable to perform the determination or the notification at a point in time when the product is placed on the measuring means. Alternatively, the determination or the notification may be configured to be performed at a point in time when the product is placed and the weight is detected. However, the aspect of performing the notification each time the product information is called is not excluded. FIG. 14 shows a display example of a determination result on a measurement screen, but the details thereof will be described later.

On the other hand, in a case of replacing the sealing and cutting dies during normal packaging work (hereinafter, referred to as "normal time"), it is necessary to wait for the sealing and cutting dies to cool, and the determination is meaningless unless the determination is performed after the operation instruction for the replacement, so that the determination timing is naturally limited. As described above, in a case of the normal time, the screen of FIG. 15(b) is displayed by pressing the emergency stop button 8, and the heating of the upper sealing and cutting die is stopped, and the natural cooling is started. The configuration may be adopted in which cooling means is provided to perform forced cooling. As shown in FIG. 15(b), on the guide screen, the current sealing and cutting dies are large in size, and the temperature of the current sealing and cutting dies, the replacement appropriate temperature, and the guide time until the replacement appropriate temperature are displayed. In addition, regarding the current temperature display for the sealing and cutting dies, unless the temperature reaches the appropriate temperature, the display aspect may be changed or the like to make it conspicuous. For example, while still waiting for the cooling, it is considered to display a message such as "The temperature is 90°C. Please wait until the temperature reaches 35°C" is displayed in red, and to display a message such as "The cooling has ended" in green in a case where the temperature is appropriate.

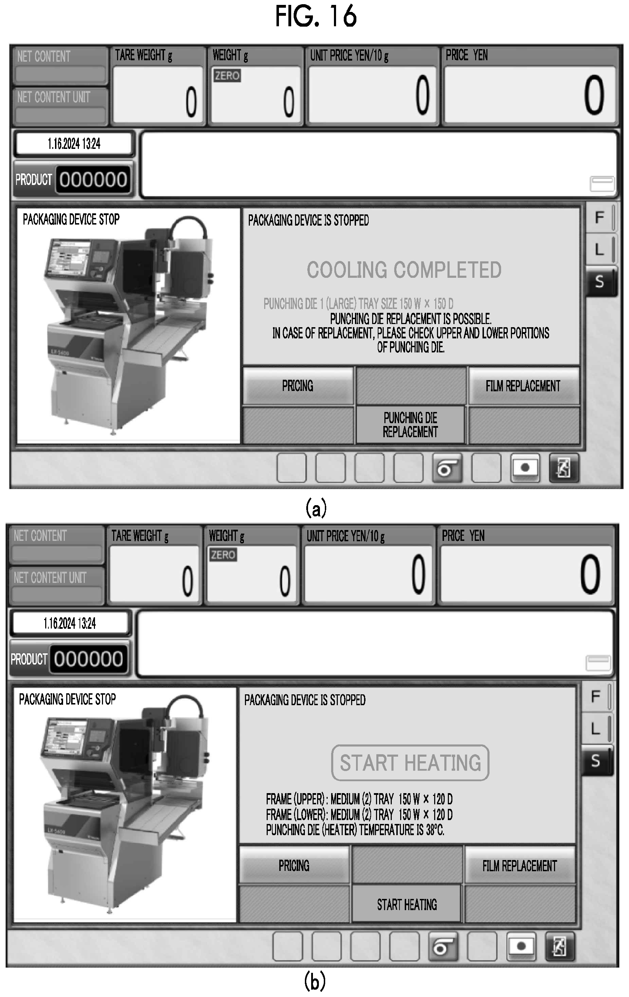

In a case where the replacement appropriate temperature is reached and the cooling is completed, the screen of FIG. 16(a) is displayed. On the guide screen, the current sealing and cutting dies are large in size, and a message urging the replacement by pressing the "sealing and cutting die replacement" button is displayed. In a case where the "sealing and cutting die replacement" button is pressed, the packaging device 100 according to the embodiment of the present invention executes control of loosening the film by rotating the film support shaft in a direction of loosening or rotating the winding side in a direction of loosening, to make it easier to replace the sealing and cutting dies. This is because the film and the upper sealing and cutting die 24 are ver-y close to each other, and there is a concern that the film may be hooked during the insertion and removal of the upper sealing and cutting die 24 (see FIG. 5). Thereafter, the operator performs the sealing and cutting die replacement work, and after the work is completed, the operator presses the "replacement completion" button (not shown). At this timing, the loading state of the upper and lower sealing and cutting dies is determined.

In a case where the sizes of the upper and lower sealing and cutting dies match as a result of the determination, for example, as shown in FIG. 16(b), on the guide screen, it is displayed that both the upper sealing and cutting die and the lower sealing and cutting die are medium in size, and the "start heating" button is displayed to be activated and in a state in which the button can be pressed. Alternatively, the control of starting the heating with the display of the start heating may be performed without the pressing operation being requested. Further, the heating may be controlled to start in a case where the upper sealing and cutting die and the lower sealing and cutting die match without displaying the start heating, and the heating may not be started in a case where the upper sealing and cutting die and the lower sealing and cutting die do not match.

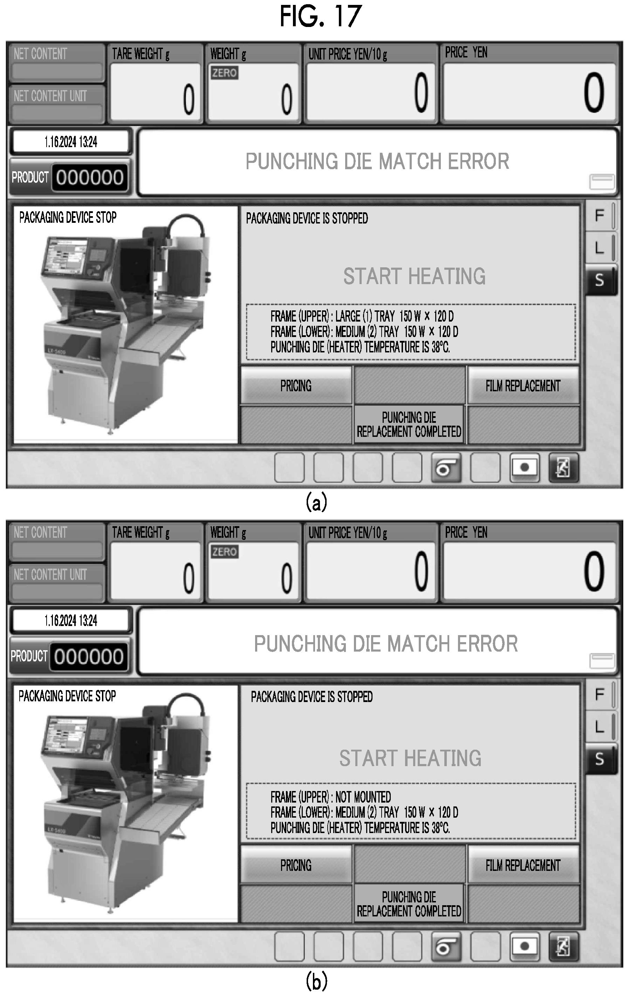

On the other hand, in a case where there is a problem with the loading state of the sealing and cutting dies as a result of the determination, the error is displayed in a conspicuous manner, and the content of the error is displayed. For example, as shown in FIG. 17(a), the upper sealing and cutting die is large in size, but the lower sealing and cutting die is medium in size, and a message indicating that the size is not suitable is displayed together with the emphasized display of the "sealing and cutting die match error". Then, the "start heating" button is not activated, and the button is in a state in which the button cannot be pressed. As another example, for example, as shown in FIG. 17(b), a message indicating that the upper sealing and cutting die is not loaded is displayed together with the emphasized display of the "sealing and cutting die match error". Then, the "start heating" button is not activated, and the button is in a state in which the button cannot be pressed.

The display example here corresponds to a configuration in which a sensor that can identify which one of the upper and lower sealing and cutting dies is loaded is provided. In the detection method using three holes or five holes, the mismatch of the upper and lower sealing and cutting dies can be determined, but which one of the upper and lower sealing and cutting dies is loaded cannot be identified. Even so, the operator who sees the display of the "sealing and cutting die match error" checks the actual loading situation, so that it is meaningful.

In addition, in a case where the determination result of the loading state of the upper and/or lower sealing and cutting dies is that the upper and lower sealing and cutting dies are not suitable or that the upper and lower sealing and cutting dies are forgotten to be loaded, the device is configured not to transition to the measuring mode until replacement or the like of the sealing and cutting die/dies is performed to be in an appropriate state or until the heating temperature is appropriate.

### (Display Example of Determination Result on Measurement Screen)

FIG. 14 is a view showing a display example of a determination result on a measurement screen. For the product name "Gauda Cheese", "Large (1)" is displayed in the "tray type selection" item, and "width 150 × depth 150" is displayed in the tray dimension item, and a skilled operator can recognize that there is a size error. Incidentally, "medium (2)" is "width 150 × depth 120", and "small (3)" is "width 120 × depth 120". In addition, for an unfamiliar operator, the display aspect may be changed from the normal aspect to be conspicuous in order to easily recognize the size error, or a message such as "size error" may be displayed together in a more direct manner. Further, the error may be notified by sound or voice.

In addition, the current "packaging mode" is displayed as "packaging and pricing mode", and the "heat sealing temperature" is displayed as "160°C". Regarding the temperature display, unless the temperature reaches the appropriate temperature, the display aspect may be changed or the like to make it conspicuous. For example, it is considered to display in red while still waiting for the heating, and to change the display to green in a case where the temperature is appropriate.

In a case where the "pricing mode" is selected as the "packaging mode", the packaging work is not executed, and the configuration is such that the match or mismatch determination and the notification of the sealing and cutting die size associated with the called product and the loaded sealing and cutting die size are not performed. Of course, the configuration may be adopted in which the determination and the notification are performed for the packaging work to be performed later.

### (Regarding Gas Replacement Process)

The gas replacement process for extending the best-before date of the product to be packaged is performed by replacing the air with an inert gas. The inert gas is used to extend the best-before date of the food by adjusting the ratios of three types of gases, that is, nitrogen, carbon dioxide, and oxygen. Oxygen may not seem to be necessary, but in fact, it is necessary to maintain the redness of the meat. As described above, by the structure of injecting the gas from between the film and the container in a state where the upper and lower sealing and cutting dies are closed, the gas can be efficiently fed. That is, it is possible to shorten the gas injection time by injecting the gas from the gas injection port 251 while exhausting the air in the sealing and cutting die from the air discharge port 252. In addition, since the gas injection port 251 is disposed on the measuring means 1 side, the gas can be injected from the same position even in the case of the sealing and cutting dies having different sizes. Further, since the gas injection port 251 and the air discharge port 252 are provided in the conveyance direction of the film, they can be reliably covered with the film without deviating left and right. Here, the setting is made such that only one type of film is prepared so that the film does not need to be replaced for each tray size. The same applies to the tray T, and since the lateral width is the same for all and only the depth is different in size, the film can be used without waste. However, a plurality of types of heights may be prepared.

In the related art, most of the gas replacement packaging was a type in which the gas was injected into the bag during bag making. The present embodiment has significant importance in that the gas replacement process with high efficiency is realized in the top sealing by injecting the gas in a state of sandwiching the film.

In addition, the device may be configured to be able to select the vacuum packaging by exhausting the air in the sealing and cutting dies from the air discharge port 252 without injecting the gas from the gas injection port 251. Further, the device may be configured to be able to select the normal packaging in which the gas is not injected and the air is not exhausted.

The time period of the gas replacement is configured to be automatically or manually changeable according to the sizes of the three types of trays T of "large", "medium", and "small". In addition, the time period of the gas replacement may be configured to be changed according to the best-before date. The console 6 may be configured to directly select the best-before date or to associate the recommended best-before date with the product information and automatically change the gas replacement time period by selecting the product. Further, a configuration may be adopted in which a plurality of gas injection ports, for example, three dedicated injection ports for nitrogen, carbon dioxide, and oxygen are provided, and the optimal gas ratio can be adjusted by setting or automatic control.

### (Regarding Other Embodiments)

The embodiment described so far performs the measuring, the packaging, and the label attachment process, but may be configured to provide a packaging dedicated mode for performing only packaging process. The packaging dedicated mode is suitable for fixed-price products that do not need to be measured. Since the tray does not need to be transferred to the downstream region to perform label attachment, in the packaging dedicated mode, the infeed bar IB may be configured to reverse rotation to discharge the tray to the front side after the packaging process. Alternatively, the device may be configured as a dedicated device that performs only the packaging. Even in this case, the technical idea of performing the gas replacement process for extending the best-before date of the product to be packaged and the packaging process by the top sealing substantially at the same time is included.

In addition, the present invention includes device configuration itself as device configuration specialized for the packaging instead of the response in the mode switching of the packaging dedicated mode. That is, the device may be configured as a dedicated device that performs only the packaging process without having the configuration of the measuring means, the console for the measuring means, the label attachment means, and the like, by causing the device to communicate with a separate device of these configurations.

In the embodiment described above, the measuring means is provided in front of the packaging means 2, but the measuring function may be provided at the position of the container bottom surface support portion 26 (see FIG. 19) or the downstream region 3 (see FIG. 5). In a case where the measuring function is provided in the downstream region 3, the measuring and the label attachment are performed after the packaging, and the measuring target in this case is the weight including the tray weight, the film weight, and the gas weight, so that it is preferable to print the weight after tare deduction. In a case where the measuring function is provided in the container bottom surface support portion 26 or the downstream region 3, the region of the broken line "1" shown in FIG. 4 is merely a placement region for carrying the product to be packaged into the device.

The packaging means can also be provided in the frontmost stage. That is, the upper and lower sealing and cutting dies may be disposed in the region of the broken line "1" shown in FIG. 4, the tray may be directly placed on the lower sealing and cutting die, and then the measuring or the label attachment may be performed. The measurement function in this case is disposed in the container bottom surface support portion 26 or the downstream region 3 described above. In a case of adopting this configuration, it is suitable to provide a shutter on the front side portion of the frontmost stage and close the shutter as soon as the tray is placed to ensure safety.

The embodiment described above is an aspect in which the inert gas is filled by blowing the gas to push out the air (gas flush), but an aspect of (narrow sense) gas replacement of exhausting the air and then introducing the gas may be adopted. Although the injection time is longer than the gas flush, it is advantageous in terms of the diffusibility of the gas and the fact that the gas reaches every corner. In this case, the air discharge port is configured as a suction port for exhausting the air first.

In addition, in the embodiment described above, the film is configured to be suspended in the same direction as the direction in which the measuring means 1, the packaging means 2, and the downstream region 3 are arranged in a vertical direction from the front side to the rear side of the device, and the lateral width size of the tray is set to be a single size, but the film may be configured to be suspended in a direction orthogonal to the measuring means 1 and the packaging means 2, and the lateral width direction of the trays may be changed for each tray size.

### <Summary of Embodiments>

### [Technical Field]

The present invention relates to a packaging device that covers a tray on which a product to be packaged is placed with a film and heat-welds the film to an edge portion of the tray.

### [Background Art]

As a packaging device in the related art, there is a packaging device that performs top sealing on a large number of trays by placing food, which is a product to be packaged, on a measuring scale, conveying the food to a tray to be supplied onto a conveyor, and heat-sealing the food to a lid of a film on the tray (for example, see Patent Document 1).

### [Citation List]

### [Patent Document]

[Patent Document 1] JP2013-515654A

### [Summary of Invention]

### [Technical Problem]

The packaging device described in Patent Document 1 performs top sealing on containers of the same size, and is not a device corresponding to a plurality of sizes of containers, and there are various points to be improved.

### [Solution to Problem]

(1) As described above, an aspect of the present embodiment is a packaging device (100) that is capable of replacing a plurality of sealing and cutting dies to seal a film to containers of a plurality of sizes, the packaging device (100) including: upper and lower sealing and cutting dies (24, 25) corresponding to the containers of the plurality of sizes; and determination means (control means of packaging device) provided in a device body and for determining a loading state of the sealing and cutting dies.
   According to the above configuration, even in a case where an inappropriate state such as a forgotten loading of the sealing and cutting die/dies occurs, it is possible to provide a packaging device having high effectiveness while suppressing the time for stopping the line.
(2) An aspect of the present embodiment is the packaging device (100) according to (1), in which the determination means (control means of packaging device) determines sizes of the upper and lower sealing and cutting dies and whether the upper and lower sealing and cutting dies match each other.
   According to the above configuration, it is possible to detect that the upper and lower sealing and cutting dies do not match and to know the size of the loaded sealing and cutting dies.
(3) An aspect of the present embodiment is the packaging device (100) according to (1) or (2), in which the upper and lower sealing and cutting dies (24, 25) each include a plurality of light-pass-through portions and/or reflecting portions disposed in different aspects depending on a type, the device body includes a plurality of optical sensors, and the determination means determines whether the upper and lower sealing and cutting dies match each other according to a detection status of light by the plurality of optical sensors.
   According to the above configuration, it is possible to perform the determination at a low cost without using an expensive component such as imaging means.
(4) An aspect of the present embodiment is the packaging device (100) according to any one of (1) to (3), in which the determination means determines the loading state of the upper and lower sealing and cutting dies during a period from power-on of the packaging device until a product calling screen is displayed, and the packaging device further includes notification means for performing notification according to a determination result of the determination means.
   According to the above configuration, it is possible to know the loading state of the sealing and cutting dies in a timely manner.
(5) An aspect of the present embodiment is the packaging device (100) according to (4), the packaging device further including: storage means for storing size information of a container associated with product information, in which the notification means performs notification in a case where sizes of the sealing and cutting dies determined by the determination means and a size of a container associated with called product information are different from each other.
   According to the above configuration, it is possible to prevent the occurrence of the packaging failure due to the difference in size.
(6) An aspect of the present embodiment is the packaging device (100) according to (5), the packaging device further including: measuring means for measuring a weight of a product, in which the determination means notifies the determination result of the loading state of the upper and lower sealing and cutting dies in a case where the weight is detected by the measuring means.

Here, as a specific timing in a case where the weight is detected by the measuring means, a point in time when the product is placed on the measuring means or a point in time when the weight is detected after the product is placed can be adopted.

According to the above configuration, it is possible to perform the notification at an appropriate timing without performing the excessive notification in a case of calling the product while changing the candidate.

Although the packaging device 100 according to the embodiment of the present invention has been described above in detail with reference to the drawings, the specific configuration is not limited to these embodiments, and the present invention includes design changes and the like within the scope of the spirit of the present invention.

### REFERENCE SIGNS LIST

- 100: Packaging device
- 1: Measuring means
- 11: Shutter
- 2: Packaging means
- 21: Film suspending means
- 211: Film holding means
- 212: Surplus film winding means
- 24: Upper sealing and cutting die
- 241: Heater means
- 242: Metal plate
- 243: Heater link
- 244: Film cutting means
- 245: Upper sealing and cutting die hole
- 25: Lower sealing and cutting die (gas replacement means)
- 251: Gas injection port
- 2510: Gas diffusion section
- 252: Air discharge port
- 253: Lower sealing and cutting die hole
- 26: Container bottom surface support portion
- 3 D: ownstream region
- 4: First discharge stage
- 5: Second discharge stage
- 6: Console (display portion)
- 7: Label attachment means
- 8: Emergency stop button
- HTM: Heat transfer member
- T: Tray
- R: Roll film
- DR: Dancer roller

## Claims

1. A packaging device that is capable of replacing a plurality of sealing and cutting dies to seal a film to containers of a plurality of sizes, the packaging device comprising:
upper and lower sealing and cutting dies corresponding to the containers of the plurality of sizes; and
determination means provided in a device body and for determining a loading state of the sealing and cutting dies.

2. The packaging device according to Claim 1,
wherein the determination means determines sizes of the upper and lower sealing and cutting dies and whether the upper and lower sealing and cutting dies match each other.

3. The packaging device according to any one of the Claims 1 or 2,
wherein the upper and lower sealing and cutting dies each include a plurality of light-pass-through portions and/or reflecting portions disposed in different aspects depending on a type,
the device body includes a plurality of optical sensors, and
the determination means determines whether the upper and lower sealing and cutting dies match each other according to a detection status of light by the plurality of optical sensors.

4. The packaging device according to any one of the Claims 1 to 3,
wherein the determination means determines the loading state of the upper and lower sealing and cutting dies during a period from power-on of the packaging device until a product calling screen is displayed, and
the packaging device further comprises notification means for performing notification according to a determination result of the determination means.

5. The packaging device according to Claim 4, further comprising:
storage means for storing size information of a container associated with product information,
wherein the notification means performs notification in a case where sizes of the sealing and cutting dies determined by the determination means and a size of a container associated with called product information are different from each other.

6. The packaging device according to Claim 5, further comprising:
measuring means for measuring a weight of a product,
wherein the determination means notifies the determination result of the loading state of the upper and lower sealing and cutting dies in a case where the weight is detected by the measuring means.
